# EUROPÄISCHE PATENTSCHRIFT

(11) **EP 0 915 406 B1**
(45) Veröffentlichungstag und Bekanntmachung des Hinweises auf die Patenterteilung: **07.05.2003**
(21) Anmeldenummer: 97810845.4
(22) Anmeldetag: 10.11.1997
(51) Int. Cl.: G05B 23/02, F02C 7/228

(54) **Verfahren zur Überwachung des Versorgungssystems einer Gasturbine mit Mehrbrennersystem sowie Vorrichtung zur Durchführung des Verfahrens**
Method for monitoring the supply system of a gas turbine with a plurality of burners and device for carrying out this method
Méthode pour surveiller le système d'alimentation d'une turbine à gaz ayant des brûleurs multiples et dispositif pour la mise en oeuvre de cette méthode

(43) Veröffentlichungstag der Anmeldung: 12.05.1999
(73) Patentinhaber: ALSTOM (Switzerland) Ltd, 5401 Baden (CH)
(72) Erfinder: Küenzi, Thomas, 4127 Birsfelden (CH); Müller, Gerhard, 5430 Wettingen (CH)

(56) Entgegenhaltungen:
- EP-A- 0 522 832
- EP-A- 0 529 900
- EP-A- 0 605 158
- DE-A- 19 518 634
- GB-A- 2 197 909
- US-A- 3 738 104
- US-A- 4 922 233
- US-A- 4 992 946

## Beschreibung

### TECHNISCHES GEBIET

Die vorliegende Erfindung bezieht sich auf das Gebiet der Gasturbinen. Sie betrifft ein Verfahren zur Ueberwachung des Versorgungssystems einer Gasturbine mit Mehrbrennersystem, welches Versorgungssystem wenigstens ein Verteilsystem umfasst, über welches ein für den Betrieb des Mehrbrennersystems benötigtes Medium unter Druck auf eine Mehrzahl von in eine Brennkammer mündenden einzelnen Brennern verteilt wird.

Die Erfindung betrifft weiterhin eine Vorrichtung zur Durchführung des Verfahrens, umfassend eine Mehrzahl von in eine Brennkammer mündenden Brennern, welche über ein Brennstoffverteilsystem mit einem unter Druck stehenden flüssigen Brennstoff versorgt werden.

### STAND DER TECHNIK

In modernen Gasturbinen, welche mit emissionsarmen Mehrbrennersystemen ausgerüstet werden, wird der Brennstoff über ein komplexes Brennstoffverteilsystem zu den Brennern bzw. Brennstofflanzen gefördert. Dasselbe gilt für Wasser, welches zur Reduktion der NOx-Emission über ein entsprechendes Wasserverteilsystem auf die Brenner verteilt wird. In den Brennstoffund Wasserleitungen ist ein Serie von Schaltventilen, Rückschlagventilen und Filtern eingebaut, welche die ordnungsgemässe Verteilung des Brennstoffes (Wassers) zu den Brennern ermöglichen.

Während der Montage oder des Betriebes der Anlage kann es zu Fehlfunktionen des Brennstoff- bzw. Wassersystems kommen. Beispielsweise können einzelne Rückschlagventile versagen oder Schaltventile falsch angesteuert werden. In der Praxis hat sich in manchen Fällen zudem gezeigt, dass Verunreinigungen im Brennstoffsystem zum Verstopfen einzelner Filter oder Brennstoffdüsen führen. In anderen Fällen unterliegen die Regelventile und die Brennstoffdüsen Erosionserscheinungen durch kleine im Brennstoff mitgeführte Festpartikel.

Alle die o.g. Unregelmässigkeiten bei der Brennstoffverteilung (bzw. Wasserverteilung) führen zu einer ungleichmässigen Brennerbelastung und damit verbunden zu einer erhöhten Temperaturbelastung einzelner Heissgasteile. Sie reduzieren damit die Lebensdauer der Gasturbine. Es ist daher wünschenswert, Fehlfunktionen in den Versorgungssystemen, insbesondere in der Brennstoff- bzw. Wasserverteilung, sicher in einer Frühphase erkennen zu können, und damit dem Betreiber der Gasturbine eine klare Analyse des Zustands seiner Anlage zu ermöglichen.

### DARSTELLUNG DER ERFINDUNG

Es ist Aufgabe der Erfindung, ein Verfahren anzugeben, mit welchen das Versorgungssystem einer Gasturbine auf einfache und sichere Weise überwacht und bei Auftreten von Abweichungen frühzeitig gezielte Gegenmassnahmen getroffen werden können, sowie eine Vorrichtung zur Durchführung des Verfahrens anzugeben.

Die Aufgabe wird bei einem Verfahren der eingangs genannten Art dadurch gelöst, dass während des Betriebs der Gasturbine fortlaufend der Druckverlust in dem wenigstens einen Verteilsystem gemessen wird, dass der gemessene Druckverlust mit einem für den jeweiligen Betriebszustand der Gasturbine charakteristischen Sollwert verglichen wird, und dass eine Meldung erstattet wird, wenn der gemessene Druckverlust vom zugehörigen Sollwert um einen vorgegebenen Wert abweicht. Die Versorgungssysteme der Gasturbine, insbesondere die Brennstoffsysteme und -düsen, können als Aneinanderreihung von Apparaten mit fixem Durchfluss beschrieben werden. Das führt dazu, dass zu jedem beliebigen Lastzustand z.B. ein klar definierter Brennstoffdruckverlust bzw. erforderlicher Brennstoffdruck existiert. Kommt es nun zu Unregelmässigkeiten im Brennstoffverteilsystem, so weichen die tatsächlich gemessenen Brennstoffdrücke von der theoretischen Kurve ab. Diesen Umstand macht sich das erfindungsgemässe Verfahren zunutze.

Eine erste bevorzugte Ausführungsform des Verfahrens nach der Erfindung zeichnet sich dadurch aus, dass zur Messung des Druckverlustes in dem wenigstens einen Verteilsystem der Druck am Eingang des Verteilsystems und in der Brennkammer gemessen und aus den beiden Druckwerten die Druckdifferenz gebildet wird, dass dem wenigstens einen Verteilsystem das zu verteilende Medium über eine Pumpe und ein der Pumpe nachgeschaltetes Regelventil zugeführt wird, und dass zur Bestimmung des Druckes im Verteilsystem der Druck am Ausgang des Regelventils gemessen wird. Durch die Wahl der Messorte wird auf einfache Weise der Druckabfall (Druckverlust) über dem gesamten Verteilsystem gemessen, ohne dass die sich ständig ändernde Stellung des Regelventils verfälschend bemerkbar machen kann.

Um auf einfache Weise eine aussagekräftige Referenzkurve von Sollwerten zu erhalten, die alle Aenderungen der Anlage während des späteren Betriebes zu detektieren gestattet, ist es vorteilhaft, wenn gemäss einer zweiten bevorzugten Ausführungsform des erfindungsgemässen Verfahrens zur Bereitstellung der Sollwerte des Druckverlustes des wenigstens einen Verteilsystems der Druckverlust in diesem Verteilsystem für verschiedene mögliche Betriebszustände bei der Erstinbetriebnahme der Gasturbine gemessen und abgespeichert wird.

Die erfindungsgemässe Vorrichtung zur Durchführung des Verfahrens umfassend eine Mehrzahl von in eine Brennkammer mündenden Brennern, welche über ein Brennstoffverteilsystem mit einem unter Druck stehenden flüssigen Brennstoff versorgt werden. Sie ist dadurch gekennzeichnet, dass sowohl am Brennstoffverteilsystem als auch an der Brennkammer jeweils ein Druckaufnehmer angeordnet ist, und dass die Druckaufnehmer an eine gemeinsame Ueberwachungseinheit angeschlossen sind.

Eine bevorzugte Ausführungsform der Vorrichtung nach der Erfindung ist dadurch gekennzeichnet, dass die Brenner in Brennergruppen zusammengefasst sind, dass jeder Brennergruppe ein eigenen Brennstoffverteilsystem bzw. Wasserverteilsystem zugeordnet ist, und dass in jedem Brennstoffverteil system bzw Wasserverteilsystem zur Ueberwachung ein Druckaufnehmer angeordnet und an die Ueberwachungseinheit angeschlossen ist.

Weitere Ausführungsformen ergeben sich aus den abhängigen Ansprüchen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einem vereinfachten Anlagenschema ein bevorzugtes Ausführungsbeispiel für ein Gasturbinen-Versorgungssystem mit erfindungsgemässer Ueberwachung; und
- Fig. 2: ein für das erfindungsgemässe Verfahren beispielhaftes Diagramm einer Sollwertkurve (A) und einer Grenzwertkurve (B) für den Druckverlust (P) im Brennstoffverteilsystem einer Gasturbine in Abhängigkeit von der Gasturbinenleistung (GTL).

### WEGE ZUR AUSFÜHRUNG DER ERFINDUNG

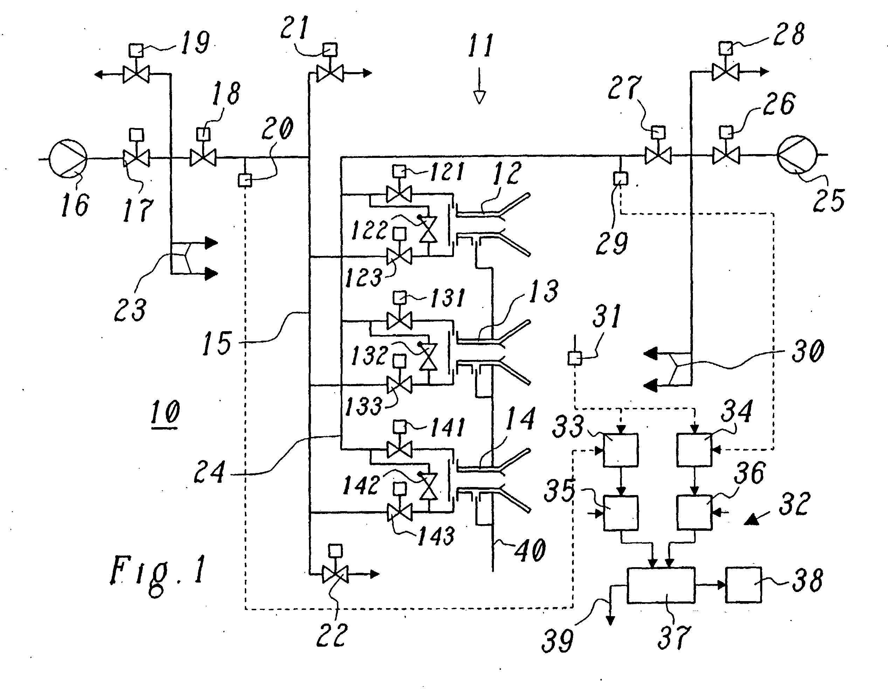

In Fig. 1 ist in einem vereinfachten Anlagenschema ein bevorzugtes Ausführungsbeispiel für ein Gasturbinen-Versorgungssystem mit erfindungsgemässer Ueberwachung wiedergegeben. Das Versorgungssystem 10 versorgt eine Mehrzahl von Brennern bzw. Brennstofflanzen 12, 13 und 14, die zu einer Brennergruppe 11 zusammengefasst sind. Weitere Brenner bzw. Brennergruppen sind üblicherweise vorhanden, in der Fig. 1 der Uebersichtlichkeit halber jedoch weggelassen. Das Versorgungssystem 10 umfasst ein Brennstoffverteilsystem 15 und ein Wasserverteilsystem 24. Die beiden Verteilsysteme 15 und 24 sind für die Brennergruppe 11 vorgesehen. Die anderen (nicht gezeigten) Brennergruppen werden durch gleichartige (nicht gezeigte) Verteilsysteme versorgt.

Dem Brennstoffverteilsystem 15 wird über eine Brennstoffpumpe 16, ein nachfolgendes Schnellschlussventil 17 und ein Regelventil 18 Brennstoff (üblicherweise Oel) unter Druck zugeführt. Der Brennstoff wird durch das Brennstoffverteilsystem 15 auf die einzelnen Brenner 12,..,14 verteilt, wobei an jedem Brenner 12,..,14 ein erstes Abschnittsventil 123, 133, 143 angeordnet ist, welches eine Steuerung der Brennstoffzufuhr für jeden Brenner einzeln ermöglicht. Zusätzlich sind am Brennstoffverteilsystem 15 für Wartungszwecke ein Belüftungsventil 21 und ein Ablassventil 22 vorgesehen. Zwischen dem Schnellschlussventil 17 und dem für das Brennstoffverteilsystem 15 zuständigen Regelventil 18 gehen weitere Leitungen 23 zu parallelen Brennstoffverteilsystemen und Brennergruppen ab. Alle Brennstoffverteilsysteme sind mit einem Entlastungsventil 19 verbunden. Zusätzlich können die Brenner 12,..,14 über eine Brenngaszuleitung 40 mit Brenngas versorgt werden.

Dem Wasserverteilsystem 24 wird analog zum Brennstoffverteilsystem 15 über eine Wasserpumpe 25, ein nachfolgendes Schnellschlussventil 26 und ein Regelventil 27 Wasser (oder Wasserdampf) unter Druck zugeführt. Das Wasser wird durch das Wasserverteilsystem 24 auf die einzelnen Brenner 12,..,14 verteilt, wobei an jedem Brenner 12,..,14 ein zweites Abschnittsventil 121, 131, 141 angeordnet ist, welches eine Steuerung der Wasserzufuhr für jeden Brenner einzeln ermöglicht. Zwischen den Abschnittsventilpaaren 121, 123 bzw. 131, 133 bzw. 141, 143 ist jeweils quer ein Rückschlagventil 122, 132, 142 vorgesehen. Zwischen dem Schnellschlussventil 26 und dem für das Wasserverteilsystem 24 zuständigen Regelventil 27 gehen weitere Leitungen 30 zu parallelen Wasserverteilsystemen und Brennergruppen ab. Alle Wasserverteilsysteme zusammen sind ebenfalls durch ein gemeinsames Entlastungsventil 28 abgesichert.

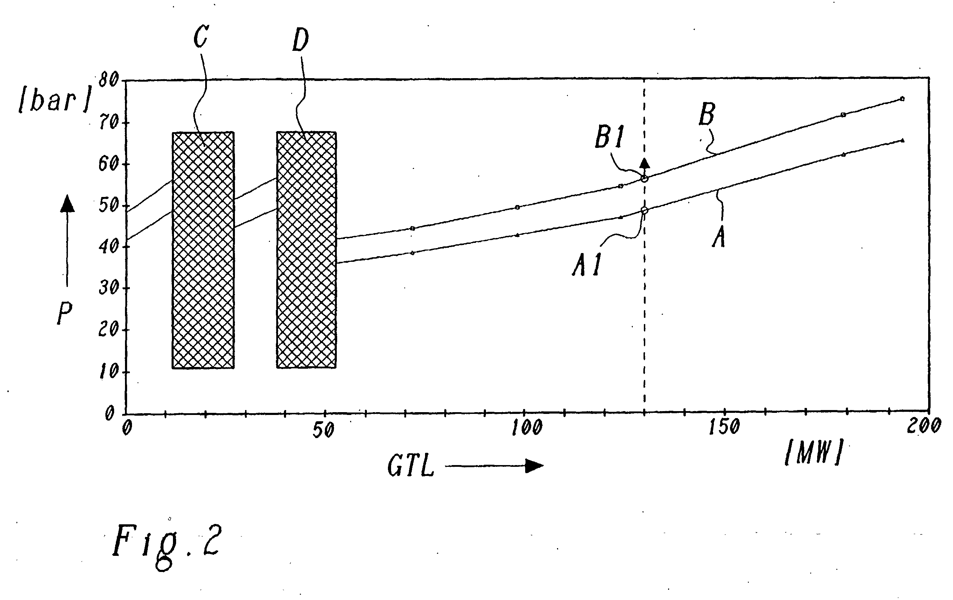

Sowohl der Brennstoff im Brennstoffverteilsystem 15 als auch das Wasser im Wasserverteilsystem 24 erleiden durch den Strömungswiderstand im System einen Druckverlust, der für den jeweiligen Zustand des Systems charakteristisch ist. Der Druckverlust ist dabei die Druckdifferenz zwischen dem Druck am Eingang des jeweiligen Verteilsystems und am Ausgang der Brenner 12,..,14 bzw. in der (nicht gezeigten) Brennkammer, in welche die Brenner münden, und die mit komprimierter Verbrennungsluft aus dem Kompressorteil der Gasturbine beaufschlagt ist. Der Druckverlust wird nun gemäss der Erfindung gemessen und überwacht. Abweichungen von einem Referenzwert (Sollwert) bzw. einer Referenzwertkurve (Sollwertkurve A bzw. Sollwert A1 in Fig. 2) werden dabei detektiert und zur frühzeitigen Analyse von Fehlern im Versorgungssystem bzw. zur frühzeitigen Vorbereitung von Inspektions- und Servicearbeiten herangezogen.

Zur Messung des Durckverlustes ist am Eingang jedes Verteilsystems 15 bzw. 24 hinter dem jeweiligen Regelventil 18 bzw. 27 jeweils ein Druckaufnehmer 20 bzw. 29 angeordnet, der fortlaufend (z.B. periodisch) den Eingangsdruck im Verteilsystem misst und die Messwerte (über die gestrichelt dargestellten Leitungen) an eine zentrale Ueberwachungseinheit (32) abgibt. Ein weiterer Druckaufnehmer 31, der an der Brennkammer angeordnet ist, misst zur gleichen Zeit den Druck in der Brennkammer und gibt die Messwerte ebenfalls an die Ueberwachungseinheit 32 weiter. In der Ueberwachungseinheit 32 werden nun in Differenzbildnern 33 und 34 jeweils die Differenzen aus den von den Druckaufnehmern 20 und 31 bzw. 29 und 31 gemessenen Druckwerten gebildet und jeweils an nachfolgende Vergleicher 35 bzw. 36 weitergeleitet. Dort werden die Druckdifferenzen, die den Druckverlusten in den Verteilsystemen 15 bzw. 24 entsprechen, mit Sollwerten verglichen, die in einem (nicht gezeigten) Speicher abgelegt sind und von dort abgerufen werden. Die Ergebnisse der Vergleich werden an eine Auswerteeinheit 37 weitergegeben. Wird in den Vergleichern 35, 36 eine Abweichung der gemessenen Druckdifferenzen von den entsprechenden Sollwerten festgestellt, die grösser ist als ein vorgegebener Grenzwert (Grenzwertkurve B bzw. Grenzwert B1 in Fig. 2), wird dies von der Auswerteeinheit 37 auf einer Anzeige 38 angezeigt. Zugleich gibt die Auswerteeinheit 37 über eine Signalleitung 39 ein entsprechendes Steuersignal (Warn- oder Alarmsignal) an eine (nicht dargestellte) zentrale Steuerung der Gasturbinenanlage weiter. Selbstverständlich kann die Differenzbildung und der Ergebnisvergleich auch in einem entsprechend programmierten Mikrorechner durchgeführt werden. Ebenso selbstverständlich stehen die Druckaufnehmer 20, 29 und 31 neben der Ueberwachungsfunktion auch für normale Regelungsaufgaben zur Verfügung. Ihre Messwerte werden dazu direkt an die zentrale Steuerung weitergeleitet, worauf hier jedoch nicht weiter eingegangen wird.

Zur Bereitstellung der Sollwerte bzw. der Sollwertkurve wird wie folgt vorgegangen: Bei der Erstinbetriebnahme wird das Brennkammerfahrkonzept so. installiert, dass die Anlagengarantien erfüllt werden. Dabei werden die tatsächlichen Druckabfälle bzw. Druckverluste in dem Brennstoffverteilsystemen bzw. Wasserverteilsystemen in Abhängigkeit von der Leistung der Gasturbine und dem Betriebskonzept gemessen und dokumentiert. Für den Brennstoffdruckverlust P (in bar) ergibt sich daraus beispielsweise die in Fig. 2 gezeigte Sollwertkurve A in Abhängigkeit von der Gasturbinenleistung GTL (in MW). Die Sollwertkurve A zeigt im Anfangsbereich (unterhalb 50 MW) durch Umschaltungen verursachte Diskontinuitäten, die durch Sperrbereiche C, D gekennzeichnet sind. In den Sperrbereichen wird das anmeldungsgemässe Ueberwachungsverfahren ausgesetzt. In den übrigen Bereichen dient die Sollwertkurve A, die den Sollzustand der Brennstoffverteilung definiert, als Vergleichskurve für die späteren, permanenten Messungen. Vergleichbare Sollwertkurven lassen sich auch für die Wasserverteilsysteme ableiten und analog einsetzen.

Während des kommerziellen Betriebes werden die Brennstoffdruckabfälle über das gewählte System gemessen und mit den im betreffenden Leistungsbereich erwarteten Werten verglichen. Arbeitet die Gasturbine beispielsweise gerade im Leistungsbereich um 130 MW (gestrichelte Linie in Fig. 2), wird der gemessene Wert für den Druckabfall mit dem dortigen Sollwert A1 der Sollwertkurve A verglichen. Zu der Sollwertkurve A ist nun eine zugehörige Grenzwertkurve B (Fig. 2) festgelegt, die angibt, wie stark die Abweichung des Istwertes vom Sollwert sein darf, ohne dass ein Alarm ausgelöst bzw. eine entsprechende Meldung abgesetzt wird. Für den Leistungsbereich um 130 MW ist der zugehörige Grenzwert in Fig. 2 mit B1 bezeichnet. Geht nun der im Brennstoffverteilsystem gemessene Druckverlust in Pfeilrichtung über den Grenzwert B1 hinaus, wird daraus in der Ueberwachungseinheit 32 das Vorhandensein einer Störung abgeleitet. Die Art und Weise, in welcher die Abweichung zustande gekommen ist, insbesondere der zeitliche Verlauf der Abweichung, lässt eine nähere Analyse der Ursachen zu. Kommt es beispielsweise zu einem schlagartigen Wechsel der Durchflusscharakteristik, so ist eine Fehlfunktion eines der Ventile der betroffenen Gruppe wahrscheinlich. Verändern sich die Charakteristiken dagegen kontinuierlich, liegt entweder ein Driften der Ventilantriebe oder ein Verstopfen von Filtern und Düsen bzw. das Auserodieren derselben zur Erklärung der Ursache nahe.

Der Zustand des Brennstoffsystems der Gasturbine bzw. des Versorgungssystems insgesamt kann so durch die erfindungsgemässe Verwendung des auf der Kontrolle der Durchflusscharakteristiken der Verteilsysteme basierenden Schutzkonzeptes permanent überwacht werden. Inspektions- und Servicearbeiten sind frühzeitig planbar und Totalausfälle einzelner Brennersysteme werden sicher vermieden.

Als besondere Vorteile der Erfindung sind dabei zu nennen:
- eine Reduktion der Belastung der Heissgasteile
- eine Erhöhung der Lebensdauer der Komponenten
- eine Erhöhung der Anlagenverfügbarkeit
- eine Optimierung der Inspektions- und Serviceintervalle.

### BEZEICHNUNGSLISTE

- 10: Versorgungssystem (Gasturbine)
- 11: Brennergruppe
- 12, ..,14: Brenner (bzw. Brennstofflanze)
- 15: Brennstoffverteilsystem
- 16: Brennstoffpumpe (Oel)
- 17, 26: Schnellschlussventil
- 18, 27: Regelventil
- 19, 28: Entlastungsventil
- 20, 29, 31: Druckaufnehmer
- 21: Belüftungsventil
- 22: Ablassventil
- 23, 30: Leitung (zu weiterer Brennergruppe)
- 24: Wasserverteilsystem
- 25: Wasserpumpe
- 32: Ueberwachungseinheit
- 33, 34: Differenzbildner
- 35, 36: Vergleicher
- 37: Auswerteeinheit
- 38: Anzeige
- 39: Signalleitung
- 40: Brenngaszuleitung
- 121, 131, 141: Abschnittsventil
- 122, 132, 142: Rückschlagventil
- 123, 133, 143: Abschnittsventil
- A: Sollwertkurve
- A1: Sollwert
- B: Grenzwertkurve
- B1: Grenzwert
- C, D: Sperrbereich

## Patentansprüche

1. Verfahren zur Ueberwachung des Versorgungssystems (10) einer Gasturbine mit Mehrbrennersystem, welches Versorgungssystem (10) wenigstens ein Verteilsystem (15, 24) umfasst, über welches ein für den Betrieb des Mehrbrennersystems benötigtes Medium unter Druck auf eine Mehrzahl von in eine Brennkammer mündenden einzelnen Brennern (12,..,14) verteilt wird, **dadurch gekennzeichnet, dass** während des Betriebs der Gasturbine fortlaufend der Druckverlust in dem wenigstens einen Verteilsystem (15, 24) gemessen wird, dass der gemessene Druckverlust mit einem für den jeweiligen Betriebszustand der Gasturbine charakteristischen Sollwert (A, A1) verglichen wird, und dass eine Meldung erstattet wird, wenn der gemessene Druckverlust vom zugehörigen Sollwert (A, A1) um einen vorgegebenen Wert abweicht.

2. Verfahren nach Anspruch 1, **dadurch gekennzeichnet, dass** zur Messung des Druckverlustes in dem wenigstens einen Verteilsystem (15, 24) der Druck am Eingang des Verteilsystems (15, 24) und in der Brennkammer gemessen und aus den beiden Druckwerten die Druckdifferenz gebildet wird.

3. Verfahren nach Anspruch 3, **dadurch gekennzeichnet, dass** dem wenigstens einen Verteilsystem (15, 24) das zu verteilende Medium über eine Pumpe (16, 25) und ein der Pumpe (16, 25) nachgeschaltetes Regelventil (18, 27) zugeführt wird, und dass zur Bestimmung des Druckes im Verteilsystem (15, 24) der Druck am Ausgang des Regelventils (18, 27) gemessen wird.

4. Verfahren nach Anspruch 1, **dadurch gekennzeichnet, dass** zur Bereitstellung der Sollwerte des Druckverlustes des wenigstens einen Verteilsystems (15, 24) der Druckverlust in diesem Verteilsystem (15, 24) für verschiedene mögliche Betriebszustände bei der Erstinbetriebnahme der Gasturbine gemessen und abgespeichert wird.

5. Verfahren nach einem der Ansprüche 1 bis 4, **dadurch gekennzeichnet, dass** bei einer Abweichung des gemessenen Druckverlustes vom Sollwert neben der Grösse der Abweichung auch deren zeitlicher Verlauf detektiert und zur Analyse der Ursachen für die Abweichung herangezogen wird.

6. Verfahren nach einem der Ansprüche 1 bis 5, **dadurch gekennzeichnet, dass** die Brenner (12,..,14) des Mehrbrennersystems in Brennergruppen (11) aufgeteilt sind, dass innerhalb des Versorgungssystems (10) der Gasturbine jeder Brennergruppe (11) ein eigenes Verteilsystem (15, 24) zugeordnet ist, und dass in jedem Verteilsystem (15, 24) der Druckverlust separat überwacht wird.

7. Verfahren nach einem der Ansprüche 1 bis 6, **dadurch gekennzeichnet, dass** das wenigstens eine Verteilsystem ein Brennstoffverteilsystem (15) für die Verteilung von flüssigem Brennstoff an die Brenner (12,..,14) ist.

8. Verfahren nach einem der Ansprüche 1 bis 6, **dadurch gekennzeichnet, dass** das wenigstens eine Verteilsystem ein Wasserverteilsystem (24) für die Verteilung von Wasser und/oder Wasserdampf an die Brenner (12,..,14) ist.

9. Vorrichtung zur Durchführung des Verfahrens nach einem der Ansprüche 1 bis 8, umfassend eine Mehrzahl von in eine Brennkammer mündenden Brennern (12,..,14), welche über ein Brennstoffverteilsystem (15) mit einem unter Druck stehenden flüssigen Brennstoff versorgt werden, **dadurch gekennzeichnet, dass** sowohl am Brennstoffverteilsystem (15) als auch an der Brennkammer jeweils ein Druckaufnehmer. (20 bzw. 31) angeordnet ist, und dass die Druckaufnehmer (20, 31) an eine gemeinsame Ueberwachungseinheit (32) angeschlossen sind.

10. Vorrichtung nach Anspruch 9, **dadurch gekennzeichnet, dass** das Brennstoffverteilsystem (15) über eine Brennstoffpumpe (16) und ein Regelventil (18) mit Brennstoff versorgt wird, und dass der Druckaufnehmer (20) in Strömungsrichtung hinter der Regelventil (20) angeordnet ist.

11. Vorrichtung nach einem der Ansprüche 9 und 10, **dadurch gekennzeichnet, dass** die Brenner (12,..,14) zusätzlich über ein Wasserverteilsystem (24) mit Wasser bzw. Dampf versorgt werden, und dass am Wasserverteilsystem (24) ein Druckaufnehmer (29) angeordnet und an die gemeinsame Ueberwachungseinheit (32) angeschlossen ist.

12. Vorrichtung nach Anspruch 11, **dadurch gekennzeichnet, dass** das Wasserverteilsystem (24) über eine Wasserpumpe (25) und ein Regelventil (27) mit Wasser versorgt wird, und dassder Druckaufnehmer (29) in Strömungsrichtung hinter der Regelventil (27) angeordnet ist.

13. Vorrichtung nach einem der Ansprüche 9 bis 12, **dadurch gekennzeichnet, dass** die Brenner (12,..,14) in Brennergruppen (11) zusammengefasst sind, dass jeder Brennergruppe (11) ein eigenen Brennstoffverteilsystem (15) bzw. Wasserverteilsystem (24) zugeordnet ist, und dass in jedem Brennstoffverteilsystem (15) bzw. Wasserverteilsystem (24) zur Ueberwachung ein Druckaufnehmer (20 bzw. 29) angeordnet und an die Ueberwachungseinheit (32) angeschlossen ist.

## Claims

1. A method for monitoring the supply system (10) of a gas turbine having a multiburner system, the said supply system (10) comprising at least one distribution system (15, 24), via which a pressurized medium required for operating the multiburner system is distributed to a plurality of individual burners (12, .., 14) opening into a combustion chamber, **characterized in that**, while the gas turbine is operating, the pressure loss in the at least one distribution system (15, 24) is measured continuously, **in that** the measured pressure loss is compared with a desired value (A, A1) characteristic of the respective operating state of the gas turbine, and **in that** a communication is issued when the measured pressure loss deviates from the associated desired value (A, A1) by a predetermined value.

2. Method according to Claim 1, **characterized in that**, in order to measure the pressure loss in the at least one distribution system (15, 24), the pressure at the inlet of the distribution system (15, 24) and in the combustion chamber is measured and the pressure difference is formed from the two pressure values.

3. Method according to Claim 3, **characterized in that** the medium to be distributed is fed to the at least one distribution system (15, 24) via a pump (16, 25) and a regulating valve (18, 24) located downstream of the pump (16, 25), and **in that**, in order to determine the pressure in the distribution system (15, 24), the pressure at the outlet of the regulating valve (18, 27) is measured.

4. Method according to Claim 1, **characterized in that**, in order to provide the desired values of the pressure loss of the at least one distribution system (15, 24), the pressure loss in this distribution system (15, 24) is measured and stored for various possible operating states when the gas turbine is first commissioned.

5. Method according to one of Claims 1 to 4, **characterized in that**, in the event of a deviation of the measured pressure loss from the desired value, in addition to the amount of the deviation its time profile is also detected and utilized to analyse the causes of the deviation.

6. Method according to one of Claims 1 to 5, **characterized in that** the burners (12, .., 14) of the multiburner system are divided into burner groups (11), **in that** each burner group (11) is assigned its own distribution system (15, 24) within the supply system (10) of the gas turbine, and **in that** the pressure loss is monitored separately in each distribution system (15, 24).

7. Method according to one of Claims 1 to 6, **characterized in that** the at least one distribution system is a fuel distribution system (15) for distributing liquid fuel to the burners (12, .., 14).

8. Method according to one of Claims 1 to 6, **characterized in that** the at least one distribution system is a water distribution system (24) for distributing water and/or steam to the burners (12, .., 14).

9. Apparatus for carrying out the method according to one of Claims 1 to 8, comprising a plurality of burners (12, .., 14) which open into a combustion chamber and which are supplied via a fuel distribution system (15) with a pressurized liquid fuel, in that a pressure transducer (20 and 31) is arranged in each case both on the fuel distribution system (15) and on the combustion chamber, and in that the pressure transducers (20, 31) are connected to a common monitoring unit (32).

10. Apparatus according to Claim 9, **characterized in that** the fuel distribution system (15) is supplied with fuel via a fuel pump (16) and a regulating valve (18), and **in that** the pressure transducer (20) is arranged behind the regulating valve (20) in the direction of flow.

11. Apparatus according to one of Claims 9 and 10, **characterized in that** the burners (12, .., 14) are additionally supplied with water or steam via a water distribution system (24), and **in that** a pressure transducer (29) is arranged on the water distribution system (24) and is connected to the common monitoring unit (32).

12. Apparatus according to Claim 11, **characterized in that** the water distribution system (24) is supplied with water via a water pump (25) and a regulating valve (27), and **in that** the pressure transducer (29) is arranged behind the regulating valve (27) in the direction of flow.

13. Apparatus according to one of Claims 9 to 12, **characterized in that** the burners (12, .., 14) are combined in burner groups (11), **in that** each burner group (11) is assigned its own fuel distribution system (15) or water distribution system (24), and **in that** a pressure transducer (20 and 29) is arranged for monitoring in each fuel distribution system (15) or water distribution system (24) and is connected to the monitoring unit (32).

## Revendications

1. Procédé pour la surveillance du système d'alimentation (10) d'une turbine à gaz dotée d'un système à plusieurs brûleurs, lequel système d'alimentation (10) comprend au moins un système de répartition (15, 24) par lequel le fluide sous pression nécessaire pour le fonctionnement du système à plusieurs brûleurs est réparti entre plusieurs brûleurs individuels (12, ..., 14) qui débouchent dans une chambre de combustion, **caractérisé en ce que** pendant le fonctionnement de la turbine à gaz, la perte de charge dans le système de répartition (15, 24) au moins présent est mesurée en permanence, **en ce que** la perte de charge mesurée est comparée à une valeur de consigne (A, A1) caractéristique de l'état de fonctionnement correspondant de la turbine à gaz et **en ce qu'**un message est envoyé lorsque la perte de charge mesurée s'écarte d'une valeur prédéterminée de la valeur de consigne (A, A1) associée.

2. Procédé selon la revendication 1, **caractérisé en ce que** pour mesurer la perte de charge dans le système de répartition (15, 24) au moins présent, la pression est mesurée à l'entrée du système de répartition (15, 24) et dans la chambre de combustion et la différence de pression est formée à partir des deux valeurs de pression.

3. Procédé selon la revendication 3, **caractérisé en ce que** le fluide à répartir est apporté au système de répartition (15, 24) au moins présent par une pompe (16, 25) et une vanne de régulation (18, 27) raccordée en aval de la pompe (16, 25), et **en ce que** pour déterminer la pression dans le système de répartition (15, 24), la pression est mesurée à la sortie de la vanne de régulation (18, 27).

4. Procédé selon la revendication 1, **caractérisé en ce que** pour préparer les valeurs de consigne de la perte de charge du système de répartition (15, 24) au moins présent, lors de la première mise en service de la turbine à gaz, la perte de charge dans ce système de répartition (15, 24) est mesurée et conservée en mémoire dans différents états de fonctionnement possible.

5. Procédé selon l'une des revendications 1 à 4, **caractérisé en ce qu'**en cas d'anomalie entre la perte de charge mesurée et la valeur de consigne qui dépasse la grandeur de l'anomalie, son évolution dans le temps est également détectée et est utilisée pour l'analyse des causes de l'anomalie.

6. Procédé selon l'une des revendications 1 à 5, **caractérisé en ce que** les brûleurs (12, ..., 14) du système à plusieurs brûleurs sont répartis en groupes (11) de brûleurs, **en ce qu'**à l'intérieur du système d'alimentation (10) de la turbine à gaz, un système de répartition propre (15, 24) est associé à chaque groupe (11) de brûleurs et **en ce que** la perte de charge est surveillée séparément dans chaque système de répartition (15, 24).

7. Procédé selon l'une des revendications 1 à 6, **caractérisé en ce que** le système de répartition au moins présent est un système (15) de répartition de carburant pour la répartition de carburant liquide entre les brûleurs (12, ..., 14).

8. Procédé selon l'une des revendications 1 à 6, **caractérisé en ce que** le système de répartition au moins présent est un système (24) de répartition d'eau pour la répartition d'eau et/ou de vapeur d'eau entre les brûleurs (12, ..., 14).

9. Dispositif en vue de la mise en oeuvre du procédé selon l'une des revendications 1 à 8, comprenant une pluralité de brûleurs (12, ..., 14) qui débouchent dans une chambre de combustion et qui sont alimentés en carburant liquide sous pression par un système (15) de répartition de carburant, **caractérisé en ce que** des enregistreurs de pression (20 ou 31) respectifs sont disposés tant sur le système (15) de répartition de carburant que dans la chambre de combustion et **en ce que** les enregistreurs de pression (20, 31) sont raccordés à une unité commune de surveillance (32).

10. Dispositif selon la revendication 9, **caractérisé en ce que** le système (15) de répartition de carburant est alimenté en carburant par une pompe à carburant (16) et par une vanne de régulation (18), et **en ce que** l'enregistreur de pression (20) est disposé en aval de la vanne de régulation (20) dans la direction de l'écoulement.

11. Dispositif selon l'une des revendications 9 et 10, **caractérisé en ce que** les brûleurs (12, ..., 14) sont de plus alimentés en eau ou en vapeur par un système (24) de répartition d'eau et **en ce qu'**un enregistreur de pression (29) est raccordé au système (24) de répartition d'eau et est raccordé à l'unité commune de surveillance (32).

12. Dispositif selon la revendication 11, **caractérisé en ce que** le système (24) de répartition d'eau est alimenté en eau par une pompe à eau (25) et une vanne de régulation (27), et **en ce que** l'enregistreur de pression (29) est disposé en aval de la vanne de régulation (27) dans la direction de l'écoulement.

13. Dispositif selon l'une des revendications 9 à 12, **caractérisé en ce que** les brûleurs (12, ..., 14) sont rassemblés en groupes (11) de brûleurs, **en ce qu'**un système propre de répartition de carburant (15) ou un système propre de répartition d'eau (24) sont associés à chaque groupe (11) de brûleurs et **en ce que** dans chaque système (15) de répartition de carburant ou chaque système (24) de répartition d'eau, un enregistreur de pression (20 ou 29) respectif de surveillance est disposé et est raccordé à l'unité de surveillance (32).
